# EUROPEAN PATENT SPECIFICATION

(11) **EP 4 286 062 B1**
(45) Date of publication and mention of the grant of the patent: **10.09.2025**
(21) Application number: 23173498.9
(22) Date of filing: 15.05.2023
(51) Int. Cl.: B06B 1/14, B06B 1/16, B25J 9/16, B65G 27/08, B65G 27/20, B65G 27/32

(54) **VIBRATION GENERATING APPARATUS AND PICKUP SYSTEM**
SCHWINGUNGSERZEUGUNGSVORRICHTUNG UND AUFNAHMESYSTEM
APPAREIL DE GÉNÉRATION DE VIBRATIONS ET SYSTÈME DE CAPTURE

(30) Priority: 30.05.2022 JP 2022087683
(43) Date of publication of application: 06.12.2023
(73) Proprietor: Seiko Epson Corporation, Tokyo 160-8801 (JP)
(72) Inventor: TAKEUCHI, Takayuki, Suwa-shi, Nagano, 392-8502 (JP)
(74) Representative: MERH-IP Matias Erny Reichl Hoffmann Patentanwälte PartG mbB

(56) References cited:
- WO-A1-2014/163105
- JP-A- 2003 040 418
- US-A- 5 615 763
- US-A- 6 056 108

## Description

The present application is based on, and claims priority from JP Application Serial Number 2022-087683, filed May 30, 2022.

### BACKGROUND

### 1. Technical Field

The present disclosure relates to a vibration generating apparatus and a pickup system comprising the vibration generating apparatus.

### 2. Related Art

A vibrating parts feeder disclosed in JP-A-6-292862 has a base, an electromagnet placed on the base, a vibrating plate placed above the base, and a pair of plate springs coupling the base and the vibrating plate. In the vibrating parts feeder, the vibrating plate is vibrated by attraction and separation of the vibrating plate using the electromagnet and parts on the vibrating plate are moved in a predetermined movement direction.

However, in the vibrating parts feeder in JP-A-6-292862, to facilitate the movement of the parts on the vibrating plate in the movement direction, the respective plate springs are inclined so that the upper end portions (coupling portions to the vibrating plate) are located at downstream of the lower end portions (coupling portions to the base) in the transport direction. Accordingly, it may be hard to move the parts in the opposite direction to the movement direction, and it is difficult to reciprocate the parts in both directions.
An elliptical vibration feeder without the pitching movement of a trough is disclosed in JP-A-2001-233121. The elliptical vibration feeder includes the linear trough. A pair of first plate springs support the trough in such a manner that it can vibrate horizontally, and pairs of second plate springs support the trough in such a manner that it can vibrate vertically. A first electromagnet for horizontally exciting the trough, and a second electromagnet for vertically exciting the trough.
A vibrating component conveying device is disclosed in WO 2014163105 A1. The vibrating component conveying device for linearly conveying components using vibration generated by two vibration generating mechanisms comprising vibration mechanisms and first and second plate springs, wherein the centers of gravity of an upper vibration system for creating vibration using the vibration generating mechanisms, and a counter vibration system are located in the same plane constituted of the component conveying direction and the vertical direction. JP2003040418 discloses a known vibration generating apparatus.

### SUMMARY

A vibration generating apparatus according to claim 1 is provided, comprising a trough having a mounting surface on which a workpiece is mounted, two plate springs supporting the trough, and a vibration generation unit vibrating the trough while elastically deforming the respective plate springs and moving the workpiece on the mounting surface, wherein the two plate springs are placed along movement directions of the workpiece and respectively have bent portions projecting in directions along the movement directions.

A pickup system according to claim 7 is provided, comprising a vibration generating apparatus on which a workpiece is mounted, a vision imaging the workpiece mounted on the vibration generating apparatus, and a robot picking up the workpiece mounted on the vibration generating apparatus based on an imaging result of the vision, wherein the vibration generating apparatus includes a trough having a mounting surface on which the workpiece is mounted, two plate springs supporting the trough, and a vibration generation unit vibrating the trough while elastically deforming the respective plate springs and moving the workpiece on the mounting surface, and the two plate springs are placed along movement directions of the workpiece and respectively have bent portions projecting in directions along the movement directions.

### BRIEF DESCRIPTION OF THE DRAWINGS

FIG. 1 is a front view showing an overall configuration of a pickup system according to a first embodiment.
FIG. 2 is a front view showing a robot.
FIG. 3 is a front view showing a vibration generating apparatus.
FIG. 4 is a front view for explanation of driving of the vibration generating apparatus.
FIG. 5 is a front view for explanation of driving of the vibration generating apparatus.
FIG. 6 is a front view for explanation of driving of the vibration generating apparatus.
FIG. 7 is a front view for explanation of driving of the vibration generating apparatus.
FIG. 8 is a perspective view showing a plate spring.
FIG. 9 is a front view showing the plate spring.
FIG. 10 is a front view showing a vibration state of a trough.
FIG. 11 is a front view showing a vibration state of the trough.
FIG. 12 is a flowchart showing a driving method of the pickup system.
FIG. 13 is a front view showing a vibration generating apparatus according to a second embodiment.
FIG. 14 is a front view showing a vibration generating apparatus according to a third embodiment.
FIG. 15 is a front view showing a vibration generating apparatus according to a fourth embodiment.
FIG. 16 is a front view showing a plate spring.
FIG. 17 is a front view showing a plate spring provided in a vibration generating apparatus according to a fifth embodiment.
FIG. 18 is a front view showing a modified example of the plate spring.
FIG. 19 is a front view showing a plate spring provided in a vibration generating apparatus according to a sixth embodiment.
FIG. 20 is a front view showing a modified example of the plate spring.
FIG. 21 is a front view showing a modified example of the plate spring.
FIG. 22 is a top view showing a vibration generating apparatus according to a seventh embodiment.
FIG. 23 is a front view showing a vibration generating apparatus according to an eighth embodiment.
FIG. 24 is a front view showing a plate spring.
FIG. 25 is a front view showing a modified example of the vibration generating apparatus.
FIG. 26 is a front view showing a modified example of the vibration generating apparatus.
FIG. 27 is a front view showing a vibration generating apparatus according to a ninth embodiment.
FIG. 28 is a front view showing a vibration generating apparatus according to a tenth embodiment.

### DESCRIPTION OF EXEMPLARY EMBODIMENTS

As below, preferred embodiments of a vibration generating apparatus and a pickup system will be explained with reference to the accompanying drawings.

### First Embodiment

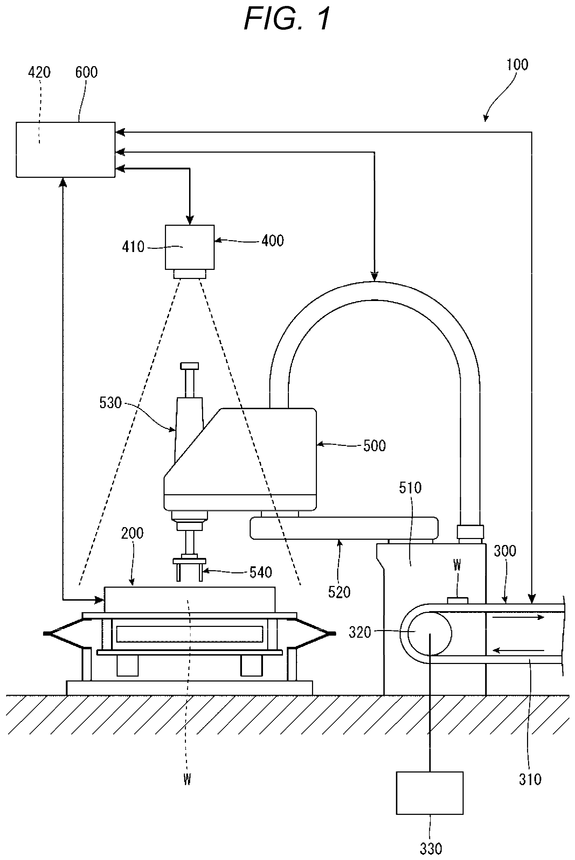

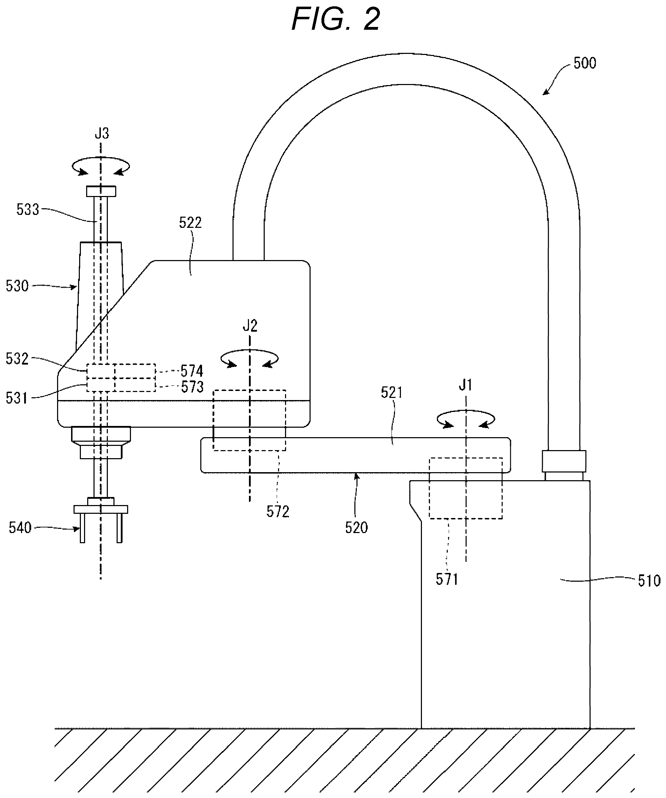

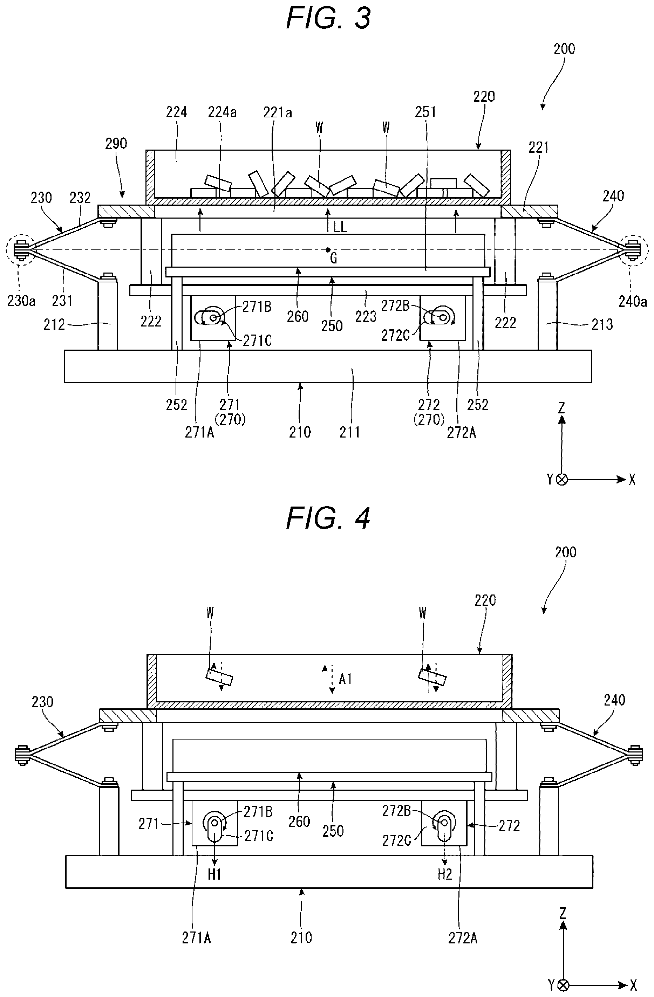

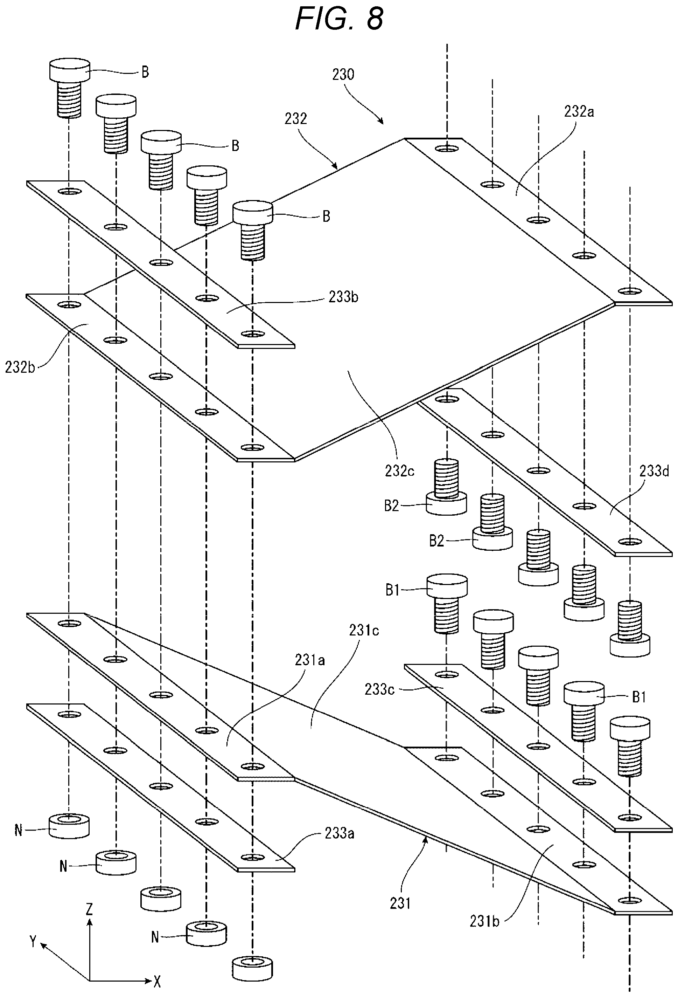

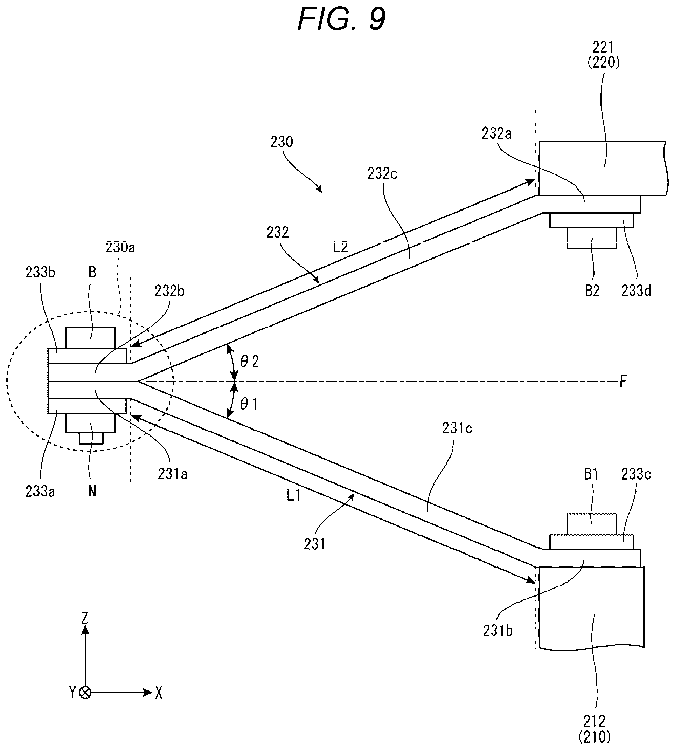

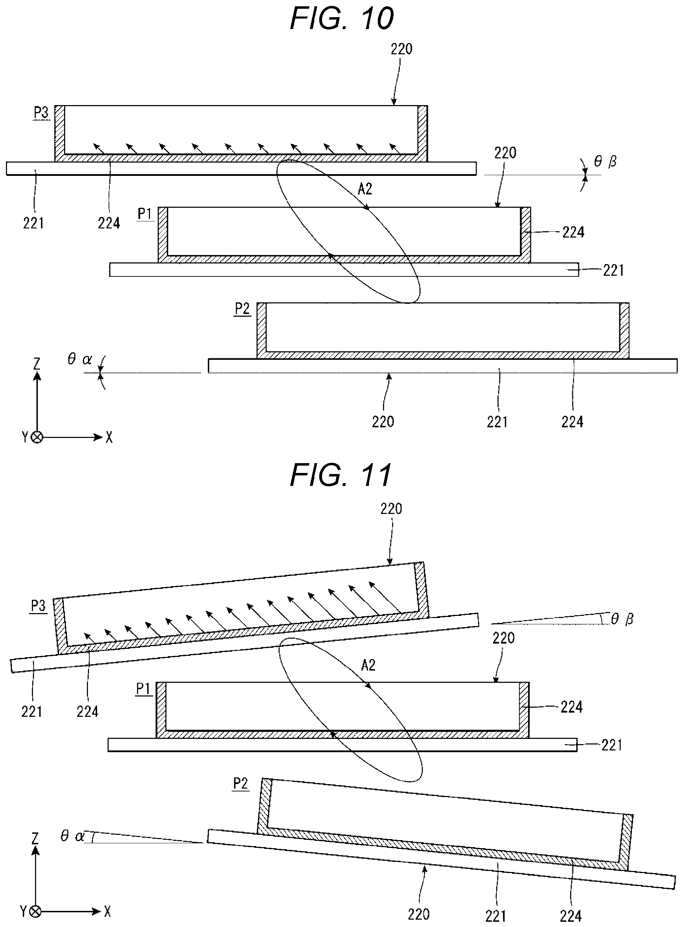

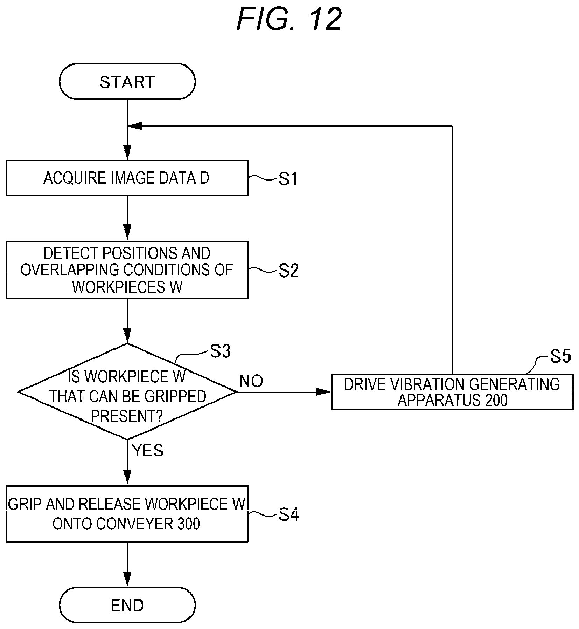

FIG. 1 is a front view showing an overall configuration of a pickup system according to a first embodiment. FIG. 2 is a front view showing a robot. FIG. 3 is a front view showing a vibration generating apparatus. FIGS. 4 to 7 are respectively front views for explanation of driving of the vibration generating apparatus. FIG. 8 is a perspective view showing a plate spring. FIG. 9 is a front view showing the plate spring. FIGS. 10 and 11 are front views showing vibration states of a trough. FIG. 12 is a flowchart showing a driving method of the pickup system.

A pickup system 100 shown in FIG. 1 has a vibration generating apparatus 200 on which workpieces W to be transported are mounted, a conveyer 300 as a transporter transporting the workpieces W, a vision 400 imaging the workpieces W mounted on the vibration generating apparatus 200, a robot 500 picking up the workpieces W mounted on the vibration generating apparatus 200 based on an imaging result of the vision 400 and releasing the workpieces onto the conveyer 300, and a control apparatus 600 controlling driving of these respective sections.

### Robot 500

The robot 500 is a scalar robot (horizontal articulated robot). As shown in FIG. 2, the robot 500 has a base 510 fixed to a floor surface and a robot arm 520 coupled to the base 510. The robot arm 520 has a first arm 521 with a proximal end portion coupled to the base 510 and pivoting around a first pivot axis J1 along a vertical direction relative to the base 510, and a second arm 522 with a proximal end portion coupled to a distal end portion of the first arm 521 and pivoting around a second pivot axis J2 along the vertical direction relative to the first arm 521.

Further, a working head 530 is provided in a distal end portion of the second arm 522. The working head 530 has a spline nut 531 and a ball screw nut 532 coaxially placed in the distal end portion of the second arm 522, and a spline shaft 533 inserted through the spline nut 531 and the ball screw nut 532. The spline shaft 533 is rotatable around a third pivot axis J3 along the vertical direction relative to the second arm 522 and movable upward and downward along the third pivot axis J3.

Further, an end effector 540 is attached to a lower end portion of the spline shaft 533. The end effector 540 is detachable and one suitable for intended work is appropriately selected therefor. The end effector 540 of the embodiment is a hand nipping and holding the workpiece W.

Further, the robot 500 has a first drive device 571 pivoting the first arm 521 around the first pivot axis J1 relative to the base 510, a second drive device 572 pivoting the second arm 522 around the second pivot axis J2 relative to the first arm 521, a third drive device 573 rotating the spline nut 531 to rotate the spline shaft 533 around the third pivot axis J3, and a fourth drive device 574 rotating the ball screw nut 532 to move the spline shaft 533 upward and downward in directions along the third pivot axis J3.

In each of the first, second, third, fourth drive devices 571, 572, 573, 574, a motor as a drive source and an encoder detecting an amount of rotation of the motor (not shown) are provided. The control apparatus 600 executes feedback control to bring the position of the robot arm 520 indicated by output of the respective encoders to coincide with a target position as a control target during operation of the pickup system 100.

As above, the robot 500 is explained. The robot 500 is not particularly limited, but may be e.g., a six-axis robot including a robot arm having six rotation axes.

### Conveyer 300

As shown in FIG. 1, the conveyer 300 has a belt 310 on which the workpieces W are placed, a feed roller 320 feeding the belt 310, a motor (not shown) driving the feed roller 320, and a feed amount sensor 330 outputting a signal according to an amount of rotation of the feed roller 320 to the control apparatus 600. The control apparatus 600 executes feedback control to bring the transport speed of the workpieces W indicated by output of the feed amount sensor 330 to coincide with a target transport speed as a control target during the operation of the pickup system 100. Thereby, the workpieces W may be stably transported at a desired speed.

### Vision 400

As shown in FIG. 1, the vision 400 images the workpieces W on the vibration generating apparatus 200 from above the vibration generating apparatus 200 and detects positions and attitudes of the workpieces W based on the captured image. The vision 400 has a camera 410 and a detection unit 420 detecting the position and the attitude of at least one workpiece W on the vibration generating apparatus 200 based on image data captured by the camera 410. Note that, in the embodiment, the detection unit 420 is incorporated in the control apparatus 600. In other words, the control apparatus 600 also serves as the detection unit 420.

Further, the camera 410 is a 3D camera (stereo camera) that can capture a range image in which each pixel has depth information. Each pixel of the camera 410 is correlated with world coordinates by the detection unit 420 and, when the workpiece W is present within an angle of view (field of view) of the camera 410, the coordinates of the workpiece W may be specified based on the position of the workpiece W within the image data. Note that the configuration of the vision 400 is not particularly limited, but may be e.g., a configuration in which a 2D camera and a depth sensor are combined or a configuration using a measuring device measuring a three-dimensional shape by the phase shift method.

### Vibration Generating Apparatus 200

As shown in FIG. 3, the vibration generating apparatus 200 has a plate-like base 210, a trough 220 placed above the base 210, two plate springs 230, 240 coupling the base 210 and the trough 220, a frame 250 fixed to the base 210, an illumination unit 260 supported by the frame 250, and a vibration generation unit 270 placed on the trough 220 and vibrating the trough 220. In the vibration generating apparatus 200 having the configuration, driving of the vibration generation unit 270 is controlled by the control apparatus 600, and thereby, the plate springs 230, 240 may be elastically deformed to apply a desired vibration to the trough 220 and the positions and attitudes of the workpieces W mounted on the trough 220 may be changed.

Hereinafter, for convenience of explanation, three axes orthogonal to one another are an X-axis, a Y-axis, and a Z-axis. Directions along the X-axis are also referred to as "X-axis directions", directions along the Y-axis are also referred to as "Y-axis directions", and directions along the Z-axis are also referred to as "Z-axis directions". Further, pointer sides of the respective axes are also referred to as "plus sides" and the opposite sides are also referred to as "minus sides". Furthermore, the Z-axis directions are along a vertical direction, and the plus side in the Z-axis direction is an upside in the vertical direction and the minus side in the Z-axis direction is a downside in the vertical direction. Note that "vertical" in this specification includes not only the vertical case but also cases with inclinations relative to the vertical case within a degree regarded as being equal to the vertical case in a technical sense. Similarly, "horizontal" in this specification includes not only the horizontal case but also cases with inclinations relative to the horizontal case within a degree regarded as being equal to the horizontal case in a technical sense.

The base 210 has a plate-like basal portion 211 and two columnar portions 212, 213 stood upward from the basal portion 211. The lower end portion of the plate spring 230 is coupled to the upper surface of the columnar portion 212 and the lower end portion of the plate spring 240 is coupled to the upper surface of the columnar portion 213. The columnar portions 212, 213 are provided as described above, and thereby, a sufficient space for placement of the trough 220 and the illumination unit 260 may be secured above the basal portion 211. Note that the configuration of the base 210 is not particularly limited.

The trough 220 is located above the base 210 and placed horizontally. Further, the trough 220 has a plate-like first base 221 coupled to the base 210 via the plate springs 230, 240, a plate-like second base 223 located below the first base 221 and coupled to the first base 221 via spacers 222 extending in the Z-axis directions, and a box-shaped trough main body 224 placed on the first base 221. The workpieces W are put into the trough main body 224. The trough main body 224 has a mounting surface 224a formed by an inner bottom surface thereof on which the workpieces W are mounted.

The mounting surface 224a has light transmissivity. In the embodiment, the bottom portion of the trough main body 224 is formed using a material having light transmissivity. Further, the first base 221 has a window portion 221a having light transmissivity in a part overlapping with the mounting surface 224a. The window portion 221a of the embodiment is a through hole penetrating the first base 221 in the thickness direction. Note that, for example, the first base 221 may be formed using a material having light transmissivity, not limited to that.

The frame 250 has a plate-like base 251 placed between the first base 221 and the second base 223 and a plurality of supports 252 coupling the base 251 and the base 210. That is, the frame 250 does not vibrate relative to the base 210 like the trough 220, but is fixed to the base 210.

The illumination unit 260 is placed on the base 251 of the frame 250 and located below the first base 221. The illumination unit 260 outputs a light LL upward toward the trough main body 224, and illuminates the workpieces W mounted on the trough main body 224 from the downside thereof via the window portion 221a and the mounting surface 224a. Thereby, bright image data may be acquired from the camera 410. Or, the shutter speed of the camera 410 may be increased. Therefore, clear image data without blur may be acquired. Accordingly, image recognition of the workpieces W may be performed by the vision 400 more accurately.

The vibration generation unit 270 is placed on the second base 223. Further, the vibration generation unit 270 has a first vibration motor 271 and a second vibration motor 272 placed on the lower surface of the second base 223.

The first vibration motor 271 has a main body portion 271A housing a stator and a rotor (not shown), a rotation shaft 271B borne by the main body portion 271A, and an eccentric weight 271C placed on the rotation shaft 271B. When the first vibration motor 271 is driven, the rotation shaft 271B rotates and a centrifugal vibration is generated by the action of the eccentric weight 271C.

Similarly, the second vibration motor 272 has a main body portion 272A housing a stator and a rotor (not shown), a rotation shaft 272B borne by the main body portion 272A, and an eccentric weight 272C placed on the rotation shaft 272B. When the second vibration motor 272 is driven, the rotation shaft 272B rotates and a centrifugal vibration is generated by the action of the eccentric weight 272C.

Note that the configurations of the first, second vibration motors 271, 272 are not particularly limited as long as the vibrations may be generated.

The first, second vibration motors 271, 272 are separately placed on both sides with respect to the center of the trough 220 in a plan view from the Z-axis direction. That is, the first vibration motor 271 is placed at the minus side in the X-axis direction of the center and the second vibration motor 272 is placed at the plus side in the X-axis direction. The rotation shafts 271B, 272B are respectively placed horizontally and parallel to each other. Particularly, in the embodiment, the rotation shafts 271B, 272B extend in the Y-axis directions and rotate around the Y-axis. Further, the rotation shafts 271B, 272B are located on the same horizontal plane. The first, second vibration motors 271, 272 are placed as described above, and thereby, a plurality of vibrations, which will be described later, may be easily generated.

The vibration generation unit 270 has a first sensor (not shown) detecting the rotation of the first vibration motor 271 and a second sensor (not shown) detecting the rotation of the second vibration motor 272. The first sensor may detect an eccentricity direction H1 of the rotation shaft 271B. Similarly, the second sensor may detect an eccentricity direction H2 of the rotation shaft 272B.

For example, as shown in FIG. 4, when the first, second vibration motors 271, 272 are rotationally driven in opposite directions to each other with both of the eccentricity directions H1, H2 downward in the vertical direction, an upward and downward vibration A1 is applied to the trough 220 while the plate springs 230, 240 are elastically deformed by cancelling out and superimposition of the vibration of the first vibration motor 271 and the vibration of the second vibration motor 272. Thereby, the workpieces W within the trough 220 jump to vibrate upward and downward. In this manner, the workpieces W may be inverted.

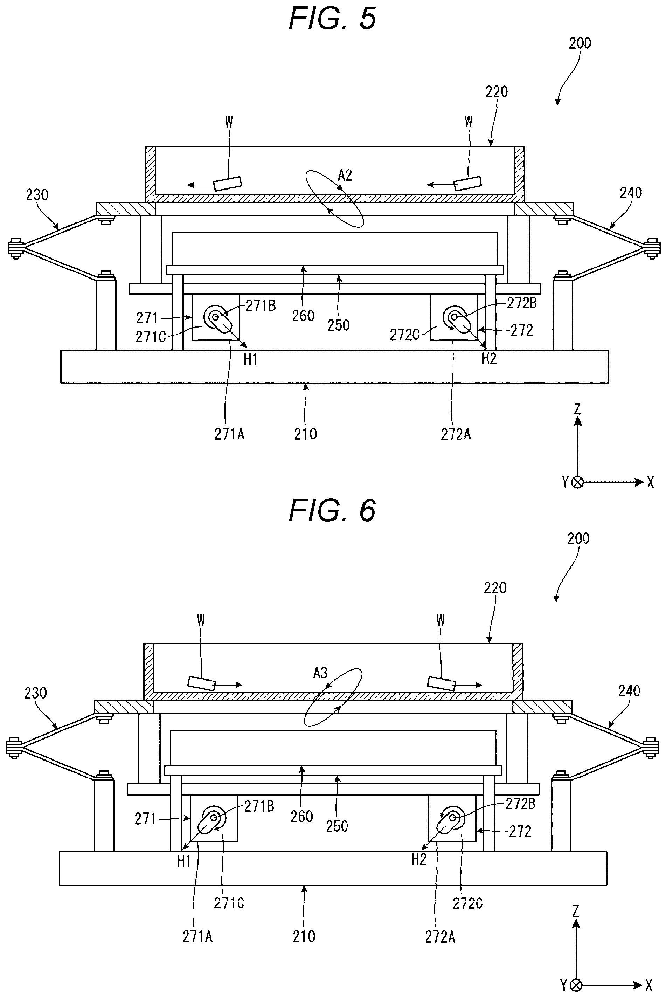

Or, for example, as shown in FIG. 5, when the first, second vibration motors 271, 272 are rotationally driven in opposite directions to each other with both of the eccentricity directions H1, H2 downward obliquely to the left, an oblique vibration A2 is applied to the trough 220 while the plate springs 230, 240 are elastically deformed by cancelling out and superimposition of the vibration of the first vibration motor 271 and the vibration of the second vibration motor 272. Thereby, the workpieces W within the trough 220 move toward the minus side in the X-axis direction.

Or, for example, as shown in FIG. 6, when the first, second vibration motors 271, 272 are rotationally driven in opposite directions to each other with both of the eccentricity directions H1, H2 downward obliquely to the right, an oblique vibration A3 is applied to the trough 220 while the plate springs 230, 240 are elastically deformed by cancelling out and superimposition of the vibration of the first vibration motor 271 and the vibration of the second vibration motor 272. Thereby, the workpieces W within the trough 220 move toward the plus side in the X-axis direction.

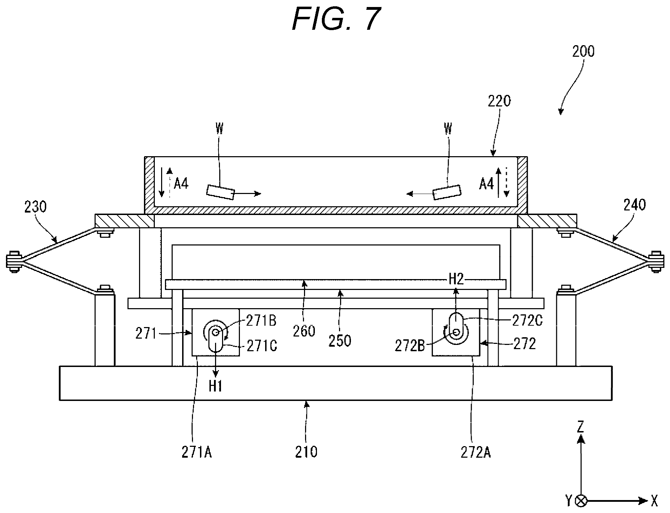

Or, for example, as shown in FIG. 7, when the first, second vibration motors 271, 272 are rotationally driven in same direction with each other with the eccentricity direction H1 downward in the vertical direction and the eccentricity direction H2 upward in the vertical direction, a vibration A4 is applied to the trough 220 while the plate springs 230, 240 are elastically deformed by cancelling out and superimposition of the vibration of the first vibration motor 271 and the vibration of the second vibration motor 272. Thereby, the workpieces W within the trough 220 move in the X-axis directions toward the center.

As described above, the workpieces W move in the X-axis directions in the vibration generating apparatus 200 and, hereinafter, the X-axis directions are movement directions of the workpieces W.

Particularly, in the embodiment, the vibration generation unit 270 is placed on the second base 223, and the vibration generation unit 270 and the trough main body 224 may be separated in the Z-axis directions. Accordingly, the vibration generated by driving of the vibration generation unit 270 is amplified and transmitted to the trough main body 224, and a larger vibration may be applied to the trough main body 224. Therefore, the positions and the attitudes of the workpieces W may be efficiently changed.

Next, the plate springs 230, 240 will be explained. As shown in FIG. 3, the plate springs 230, 240 are placed in line in the X-axis directions. The plate spring 230 is located at the minus side in the X-axis direction of the trough 220 and the upper end portion thereof is coupled to the first base 221 and the lower end portion thereof is coupled to the base 210. On the other hand, the plate spring 240 is located at the plus side in the X-axis direction of the trough 220 and the upper end portion thereof is coupled to the first base 221 and the lower end portion thereof is coupled to the base 210. These two plate springs 230, 240 are symmetrically placed with respect to a plane as a YZ-plane intersecting with the center of gravity G of the trough 220.

According to the configuration, the trough 220 is supported on both sides in the X-axis directions by the plate springs 230, 240. The trough 220 is supported on both sides by the plate springs 230, 240, and thereby, the trough 220 may be stably supported and a stable vibration may be applied to the trough 220.

The plate spring 230 is substantially in an L-shape having a bent portion 230a bent in the center part in the Z-axis directions and projecting toward the minus side in the X-axis direction. Similarly, the plate spring 240 is substantially in an L-shape having a bent portion 240a bent in the center part in the Z-axis directions and projecting toward the plus side in the X-axis direction. The plate springs 230, 240 are formed in the shapes, and thereby, the plate springs 230, 240 may smoothly elastically deform in the respective directions of the vibrations A1, A2, A3, A4 and respectively easily generate the vibrations A1, A2, A3, A4. Accordingly, the positions and the attitudes of the workpieces W may be easily changed. Particularly, the workpieces W may be smoothly reciprocated toward both sides in the X-axis directions.

As below, the configurations of the plate springs 230, 240 will be explained in detail. The plate springs 230, 240 have the same configuration as each other and the plate spring 230 will be representatively explained and the explanation of the plate spring 240 will be omitted.

As shown in FIGS. 8 and 9, the plate spring 230 has the bent portion 230a bent in the center part in the Z-axis directions and projecting toward the minus side in the X-axis direction. Further, the plate spring 230 has a first member 231 forming the lower half and a second member 232 forming the upper half. These first member 231 and second member 232 are separately formed and symmetrically placed with respect to an XY-plane. Note that the constituent materials of the first, second members 231, 232 are not particularly limited, but various metal materials including e.g., aluminum, copper, and stainless steel may be used.

The first member 231 is formed by bending of a flat plate in both end parts and has an upper end portion 231a and a lower end portion 231b both being horizontal and a first inclined portion 231c located between the upper end portion 231a and the lower end portion 231b and inclined with the upper surface facing the plus side in the X-axis direction. Similarly, the second member 232 is formed by bending of a flat plate in both end parts and has an upper end portion 232a and a lower end portion 232b both being horizontal and a second inclined portion 232c located between the upper end portion 232a and the lower end portion 232b and inclined with the upper surface facing the minus side in the X-axis direction. Further, the lower end portion 231b of the first member 231 forms the lower end portion of the plate spring 230 and the upper end portion 232a of the second member 232 forms the upper end portion of the plate spring 230. As described above, the first inclined portion 231c and the second inclined portion 232c are provided, and thereby, particularly, the plate spring 230 may smoothly elastically deform in the directions of the vibrations A2, A3, and may respectively easily generate the vibrations A2, A3. Accordingly, the workpieces W may be reciprocated toward both sides in the X-axis directions more easily and smoothly.

The first inclined portion 231c inclines by an angle θ1 around the Y-axis relative to the XY-plane. Further, pluralities of insertion holes for insertion of bolts (screws) are respectively formed in line in the Y-axis directions in the upper end portion 231a and the lower end portion 231b. Similarly, the second inclined portion 232c inclines by an angle θ2 around the Y-axis relative to the XY-plane. Further, pluralities of insertion holes for insertion of bolts are respectively formed in line in the Y-axis directions in the upper end portion 232a and the lower end portion 232b.

The upper end portion 231a of the first member 231 and the lower end portion 232b of the second member 232 are coupled by fastening of bolts B and nuts N. Thereby, the plate spring 230 having the coupling portion of the first member 231 and the second member 232 as the bent portion 230a is obtained. For example, as in an embodiment, which will be described later, the plate spring 230 may be formed by bending of a single flat plate, however, in this case, it is necessary to largely bend the flat plate in the part of the bent portion 230a and the strength reduction of the plate spring 230 may be caused due to plastic deformation. On the other hand, according to the configuration in which the separate first, second members 231, 232 are coupled, it is not necessary to largely bend in the bent portion 230a and the strength reduction of the plate spring 230 due to plastic deformation may be suppressed. Note that the coupling method of the first member 231 and the second member 232 is not particularly limited, but e.g., rivets may be used, welding may be performed, or adhesives may be used.

Particularly, in the embodiment, the upper end portion 231a and the lower end portion 232b are stacked and the portions are sandwiched by plates 233a, 233b from upside and downside and fastened by screws. Thereby, the coupling part of the first member 231 and the second member 232 may be reinforced. Further, stress generated by fastening of the bolts B and the nuts N is dispersed by the plates 233a, 233b, and stress concentration around the bolts B may be suppressed. Accordingly, the mechanical strength of the plate spring 230 is increased.

The lower end portion 231b of the first member 231 is coupled to the base 210 by bolts B1. Particularly, in the embodiment, a plate 233c is placed on the upside of the lower end portion 231b and fastened by screws from upside. Thereby, the coupling part of the first member 231 and the base 210 may be reinforced. The stress generated by fastening of the bolts B1 is dispersed by the plate 233c and the stress concentration around the bolts B1 may be suppressed. Accordingly, the mechanical strength of the plate spring 230 is increased. Note that the coupling method of the first member 231 and the base 210 is not particularly limited, but e.g., rivets may be used, welding may be performed, or adhesives may be used.

The upper end portion 232a of the second member 232 is coupled to the trough 220 by bolts B2. Particularly, in the embodiment, a plate 233d is placed on the downside of the upper end portion 232a and fastened by screws from downside. Thereby, the coupling part of the second member 232 and the trough 220 may be reinforced. The stress generated by fastening of the bolts B2 is dispersed by the plate 233d and the stress concentration around the bolts B2 may be suppressed. Accordingly, the mechanical strength of the plate spring 230 is increased. Note that the coupling method of the second member 232 and the trough 220 is not particularly limited, but e.g., rivets may be used, welding may be performed, or adhesives may be used.

Here, as shown in FIG. 9, when a length of the first inclined portion 231c is L1 and a length of the second inclined portion 232c is L2, a difference between L1 and L2 is not particularly limited, but preferably within ±20%, more preferably within ±10%, and even more preferably within ±5%. That is, 0.8 ≤ L1/L2 ≤ 1.2 is preferable, 0.9 ≤ L1/L2 ≤ 1.1 is more preferable, and 0.95 ≤ L1/L2 ≤ 1.05 is even more preferable. Thereby, the vertical symmetry of the plate spring 230 is increased and the stress may be dispersed upward and downward with balance. Accordingly, the durability of the plate spring 230 is increased.

Not particularly limited, but a difference between the angle θ1 and the angle θ2 is preferably within ±20%, more preferably within ±10%, and even more preferably within ±5%. That is, 0.8 ≤ θ1/θ2 ≤ 1.2 is preferable, 0.9 ≤ θ1/θ2 ≤ 1.1 is more preferable, and 0.95 ≤ θ1/θ2 ≤ 1.05 is even more preferable. Thereby, the vertical symmetry of the plate spring 230 is increased and the stress may be dispersed upward and downward with balance. Accordingly, the durability of the plate spring 230 is increased.

Particularly, in the embodiment, L1 = L2 and θ1 = θ2, and the plate spring 230 is symmetrically placed with respect to an XY-plane F intersecting with the bent portion 230a. That is, the plate spring 230 has the vertically symmetrical shape. Thereby, the above described effects are more remarkable. Further, the vibrations A2, A3 may be generated in equal intensity. Accordingly, the workpieces W may be more smoothly reciprocated toward both sides in the X-axis directions.

Not particularly limited, but a difference between a spring constant kx of the plate spring 230 in the X-axis directions and a spring constant kz in the Z-axis directions is preferably within ±50%, more preferably within ±25%, and even more preferably within ±5%. That is, 0.5 ≤ kx/kz ≤ 1.5 is preferable, 0.25 ≤ kx/kz ≤ 1.25 is more preferable, and 0.95 ≤ kx/kz ≤ 1.05 is even more preferable. As described above, when the spring constants kx, kz are set to be substantially equal, a spring constant kxz in oblique directions inclined with respect to the X-axis directions and the Z-axis directions is also substantially equal to these. Accordingly, the vibrations A1, A2, A3, A4 may be respectively generated in resonance, and the positions and the attitudes of the workpieces W may be efficiently changed. Therefore, the workpieces W may be more smoothly reciprocated toward both sides in the X-axis directions.

Particularly, in the embodiment, kx = kz. Accordingly, the above described effects are remarkable. Note that, depending on the materials of the plate springs 230, 240, L1, L2, thicknesses, etc., the angles θ1, θ2 are set to from 40° to 70°, and thereby, the spring constants ks, kz may be made easily substantially equal.

As above, the plate springs 230, 240 are explained. Here, as shown in FIG. 3, a movable portion 290 as a portion supported by the plate springs 230, 240 and movable relative to the base 210, in the embodiment, the center of gravity G of an aggregate of the trough 220 and the vibration generation unit 270 is located between the plate springs 230, 240. Particularly, in the embodiment, the center of gravity of the trough 220 is located at equal distances from the plate springs 230, 240 on the XY-plane F intersecting with the bent portions 230a, 240a. As described above, the center of gravity G is located between the plate springs 230, 240, and the inclination of the trough 220 when vibrating may be suppressed. As below, the explanation will be made with the vibration A2 shown in FIG. 5 as an example.

FIG. 10 shows a natural state P1, a bottom point state P2, and a top point state P3 of the trough 220 in which the vibration A2 is generated. Note that the natural state P1 is a state without a vibration, the bottom point state P2 is a state in which the trough 220 is located at the lowermost position, and the top point state P3 is a state in which the trough 220 is located at the uppermost position. As shown in the same drawing, when the center of gravity G is located between the plate springs 230, 240, an inclination θα of the mounting surface 224a in the bottom point state P2 relative to the mounting surface 224a in the natural state P1 and an inclination θβ of the mounting surface 224a in the top point state P3 relative to the mounting surface 224a in the natural state P1 may be respectively set to be smaller, preferably zero. Accordingly, the mounting surface 224a may translationally vibrate, that is, vibrate while keeping in a horizontal position and make the magnitude of the vibrations applied to the respective parts of the mounting surface 224a even. As a result, the workpieces W on the mounting surface 224a may be more smoothly moved toward the plus side in the X-axis direction.

Note that the center of gravity G of the movable portion 290 is not necessarily located between the plate springs 230, 240. For example, the center of gravity G of the movable portion 290 may be located above or below the plate springs 230, 240. Note that, in this case, the inclinations θα, θβ tend to be larger. As the inclinations θα, θβ are larger, as shown in FIG. 11, the magnitude of the vibrations applied to the respective parts of the mounting surface 224a may be uneven and the movement speeds of the workpieces W may vary depending on the locations.

### Control Apparatus 600

As shown in FIG. 1, the control apparatus 600 respectively controls driving of the vibration generating apparatus 200, the conveyer 300, the vision 400, and the robot 500. The control apparatus 600 includes e.g., a computer having a processor (CPU) processing information, a memory communicably coupled to the processor, and an external interface coupling to an external apparatus. Various programs executable by the processor are stored in the memory and the processor may read and execute various programs etc. stored in the memory. Part or all of the component elements of the control apparatus 600 may be placed inside of a housing of the robot 500. Or, the control apparatus 600 may include a plurality of processors.

As above, the configuration of the pickup system 100 is explained. Next, a driving method of the pickup system 100 is explained with reference to FIG. 12. First, as step S1, the control apparatus 600 images the workpieces W within the trough 220 using the camera 410 and acquires image data D with the robot 500 set in an attitude not hindering the imaging. Then, as step S2, the control apparatus 600 detects position and attitude of at least one workpiece W based on the image data D. Note that, for the detection of the attitude of the workpiece W, e.g., template matching may be used.

Then, as step S3, the control apparatus 600 detects presence or absence of the workpiece W in the position and attitude that can be gripped by the robot 500 of the workpieces W in the detected positions and attitudes. When the workpiece W in the position and attitude that can be gripped by the robot 500 is present, as step S4, the control apparatus 600 grips and releases the workpiece W onto the belt 310 of the conveyer 300 using the robot 500. Thereby, the workpiece W may be transported to a predetermined location by the conveyer 300.

On the other hand, at step S3, when the workpiece W in the position and attitude that can be gripped by the robot 500 is absent, as step S5, the control apparatus 600 resets the position and attitude of the workpiece W within the trough 220 by driving the vibration generating apparatus 200 and executes from step S1. According to the driving method, the workpiece W may be gripped more reliably by the robot 500.

As above, the pickup system 100 is explained. The vibration generating apparatus 200 of the pickup system 100 has the trough 220 having the mounting surface 224a on which the workpiece W is mounted, the two plate springs 230, 240 supporting the trough 220, and the vibration generation unit 270 vibrating the trough 220 while elastically deforming the respective plate springs 230, 240 and moving the workpiece W on the mounting surface 224a. Further, the two plate springs 230, 240 are placed along the X-axis directions as the movement directions of the workpiece W and have the bent portions 230a, 240a projecting in the directions along the X-axis directions, respectively. The plate springs 230, 240 have the shapes, and thereby, the vibration shown in FIG. 10 and the vibration shown in FIG. 11 may be respectively easily generated. Accordingly, the workpiece W may be smoothly reciprocated toward both sides in the X-axis directions.

As described above, the plate spring 230 has the plate-like first inclined portion 231c and the plate-like second inclined portion 232c inclined in the opposite directions. The same applies to the plate spring 240. Thereby, the vibrations A2, A3 may be generated more easily. Accordingly, the workpiece W may be reciprocated toward both sides in the X-axis directions more easily.

As described above, the first inclined portion 231c and the second inclined portion 232c are symmetrically placed. That is, the plate spring 230 is symmetrically placed with respect to the XY-plane intersecting with the bent portion 230a. Thereby, the stress may be dispersed upward and downward with balance and the durability of the plate spring 230 is increased. Further, the vibrations A2, A3 may be generated with equal strengths. Accordingly, the workpiece W may be more smoothly reciprocated toward both sides in the X-axis directions.

As described above, the first inclined portion 231c and the second inclined portion 232c are separately formed. The first, second inclined portion 231c, 232c are separately formed, and thereby, in the bent portion 230a, it is not necessary to largely bend the flat plate as the base material of the plate spring 230 and the plate spring 230 having the sufficiently high strength may be obtained.

As described above, the center of gravity G of the movable portion 290 as the portion supported by the two plate springs 230, 240 is located between the two plate springs 230, 240. Thereby, the inclination of the trough 220 when vibrating may be suppressed and the workpiece W may be more smoothly moved in the X-axis directions.

As described above, the vibration generation unit 270 has the first vibration motor 271 and the second vibration motor 272 having the rotation shafts 271B, 272B along the horizontal directions and parallel to each other. The first, second vibration motors 271, 272 are placed as described above, and thereby, the above described plurality of vibrations may be easily generated.

As described above, the pickup system 100 has the vibration generating apparatus 200 on which the workpiece W is placed, the vision 400 imaging the workpiece W mounted on the vibration generating apparatus 200, and the robot 500 picking up the workpiece W mounted on the vibration generating apparatus 200 based on the imaging result of the vision 400. Further, the vibration generating apparatus 200 includes the trough 220 having the mounting surface 224a on which the workpiece W is placed, the two plate springs 230, 240 supporting the trough 220, and the vibration generation unit 270 vibrating the trough 220 while elastically deforming the respective plate springs 230, 240 and moving the workpiece W on the mounting surface 224a. Further, the plate springs 230, 240 are placed along the X-axis directions as the movement directions of the workpiece W and have the bent portions 230a, 240a projecting in the directions along the X-axis directions, respectively. The plate springs 230, 240 have the shapes, and thereby, the vibrations A2, A3 may be respectively easily generated. Accordingly, the workpiece W may be reciprocated toward both sides in the X-axis directions.

### Second Embodiment

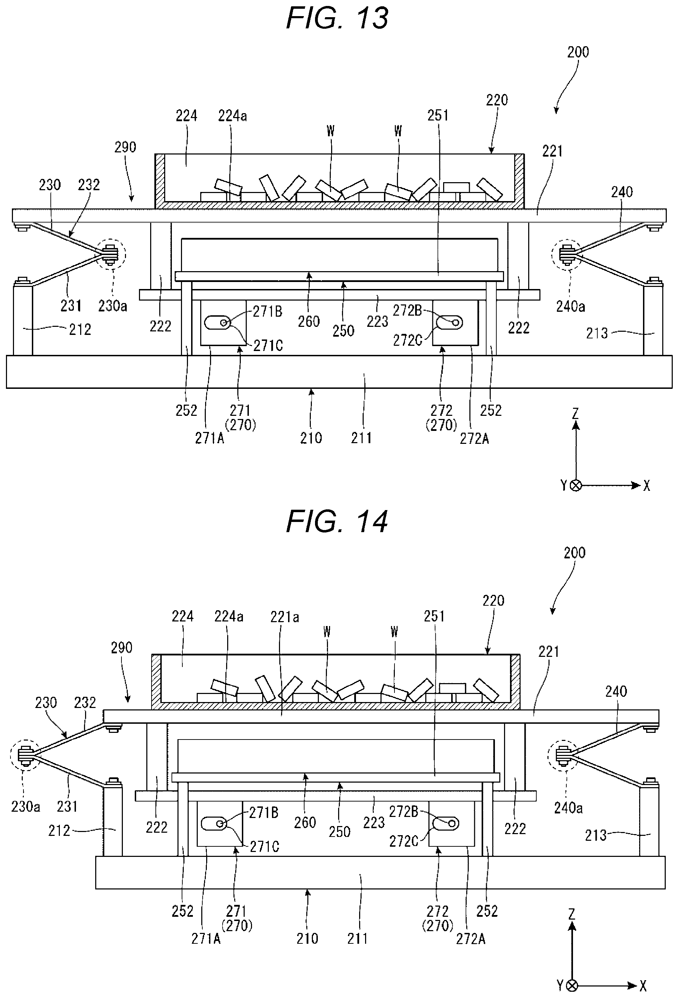

FIG. 13 is a front view showing a vibration generating apparatus according to a second embodiment.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the drawing of the embodiment, the same configurations as those of the above described embodiment have the same signs.

As shown in FIG. 13, in the vibration generating apparatus 200 of the embodiment, the plate spring 230 has the bent portion 230a placed toward the plus side in the X-axis direction and the plate spring 240 has the bent portion 240a placed toward the minus side in the X-axis direction.

According to the second embodiment, the same effects as those of the above described first embodiment may be exerted.

### Third Embodiment

FIG. 14 is a front view showing a vibration generating apparatus according to a third embodiment.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the drawing of the embodiment, the same configurations as those of the above described embodiment have the same signs.

As shown in FIG. 14, in the vibration generating apparatus 200 of the embodiment, the plate spring 240 has the bent portion 240a placed toward the minus side in the X-axis direction.

According to the third embodiment, the same effects as those of the above described first embodiment may be exerted.

### Fourth Embodiment

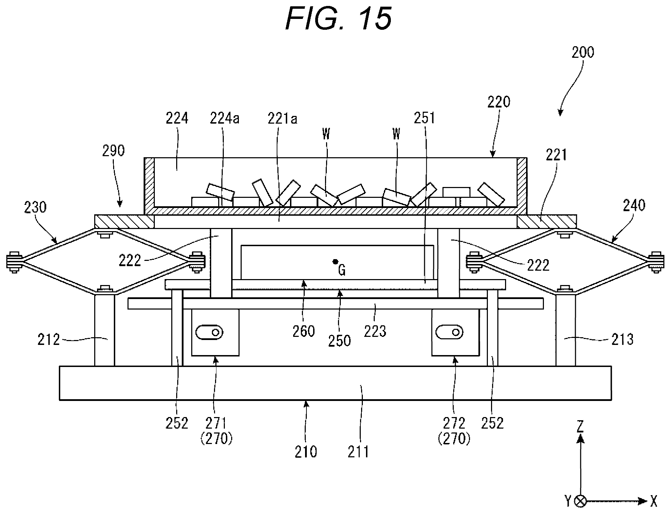

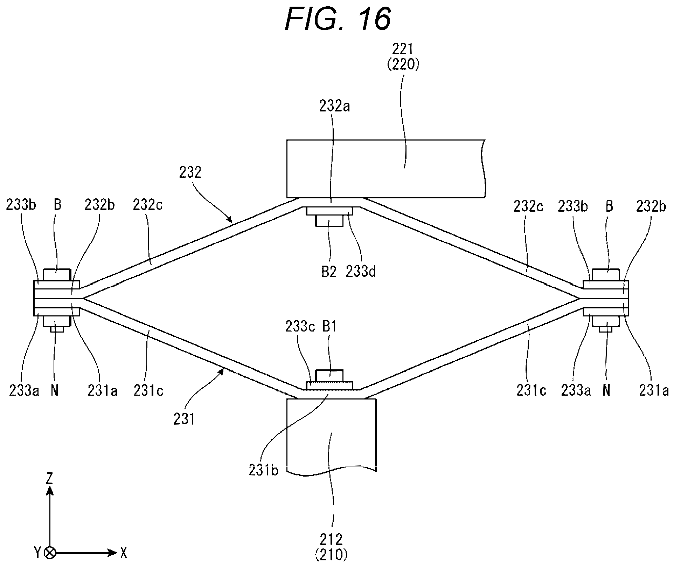

FIG. 15 is a front view showing a vibration generating apparatus according to a fourth embodiment. FIG. 16 is a front view showing a plate spring.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the respective drawings of the embodiment, the same configurations as those of the above described embodiment have the same signs. Further, the plate springs 230, 240 have the same configuration as each other and, as below, the plate spring 230 will be representatively explained and the explanation of the plate spring 240 will be omitted.

As shown in FIG. 15, in the vibration generating apparatus 200 of the embodiment, the plate spring 230 has a rhombic shape. Further, as shown in FIG. 16, the first member 231 is bent into a valley shape convex downward and has the lower end portion 231b located in the center part, a pair of upper end portions 231a located in both end parts, and a pair of first inclined portions 231c located between the lower end portion 231b and the respective upper end portions 231a. The first inclined portions 231c located at the minus side in the X-axis direction inclines with the lower surface facing the minus side in the X-axis direction, and the first inclined portions 231c located at the plus side in the X-axis direction inclines with the lower surface facing the plus side in the X-axis direction.

On the other hand, the second member 232 is bent into a mountain shape convex upward and has the upper end portion 232a located in the center part, a pair of lower end portions 232b located in both end parts, and a pair of second inclined portions 232c located between the upper end portion 232a and the respective lower end portions 232b. The second inclined portions 232c located at the minus side in the X-axis direction inclines with the upper surface facing the minus side in the X-axis direction, and the second inclined portions 232c located at the plus side in the X-axis direction inclines with the upper surface facing the plus side in the X-axis direction.

Further, the upper end portion 231a and the lower end portion 232b at the minus side in the X-axis direction are fastened and the upper end portion 231a and the lower end portion 232b at the plus side in the X-axis direction are fastened. As described above, the plate spring 230 is formed in the rhombic shape, and thereby, the stress may be dispersed upward and downward and leftward and rightward (Z-axis directions and X-axis directions) with balance. Accordingly, the durability of the plate spring 230 is increased.

According to the fourth embodiment, the same effects as those of the above described first embodiment may be exerted.

### Fifth Embodiment

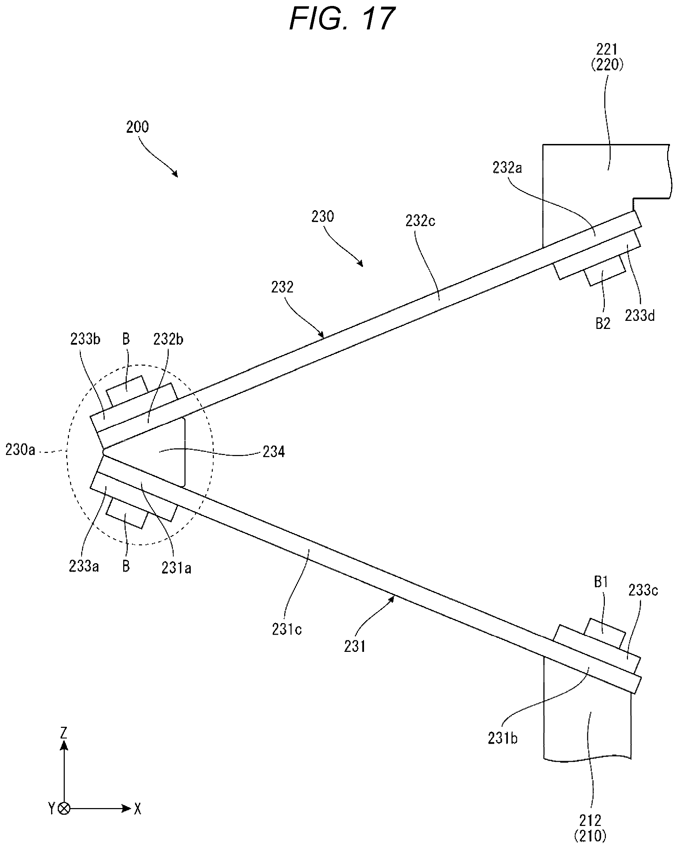

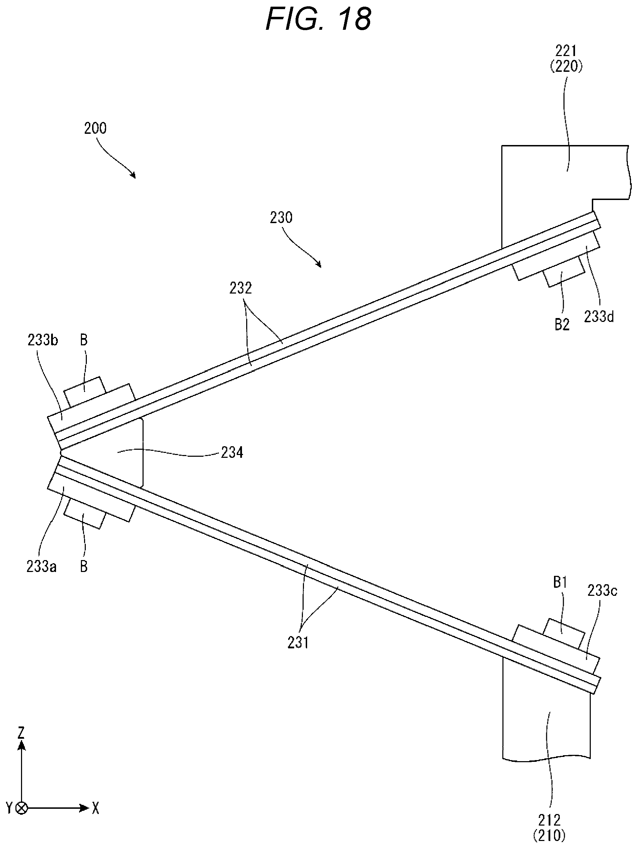

FIG. 17 is a front view showing a plate spring provided in a vibration generating apparatus according to a fifth embodiment. FIG. 18 is a front view showing a modified example of the plate spring.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the respective drawings of the embodiment, the same configurations as those of the above described embodiment have the same signs. Further, the plate springs 230, 240 have the same configuration as each other and, as below, the plate spring 230 will be representatively explained and the explanation of the plate spring 240 will be omitted.

As shown in FIG. 17, in the vibration generating apparatus 200 of the embodiment, the plate spring 230 further has a coupling portion 234 coupling the first member 231 and the second member 232 in addition to the first member 231 and the second member 232.

The first member 231 is formed using a flat plate and the upper end portion 231a and the lower end portion 231b are not bent unlike the above described first embodiment. Similarly, the second member 232 is formed using a flat plate and the upper end portion 232a and the lower end portion 232b are not bent unlike the above described first embodiment. Thereby, plastic deformation by bending does not occur and the strength reduction of the first, second members 231, 232 may be effectively suppressed. Further, the first, second members 231, 232 may be formed using materials hard to be bent.

The coupling portion 234 has a triangular prism shape. The upper end portion 231a of the first member 231 is fastened to one side surface of the coupling portion 234 and the lower end portion 232b of the second member 232 is fastened to another side surface. Thereby, the plate spring 230 substantially in an L-shape having the bent portion 230a projecting toward the minus side in the X-axis direction is obtained.

According to the fifth embodiment, the same effects as those of the above described first embodiment may be exerted. Note that, as shown in FIG. 18, pluralities of the first, second members 231, 232 may be respectively placed to be stacked. Thereby, the mechanical strength of the plate spring 230 is increased and the durability is increased. In this case, the stacked first members 231 may be bonded, however, preferably not bonded. The members are not bonded, and thereby, misalignment of the first members 231 may be allowable and the stress may be relaxed.

### Sixth Embodiment

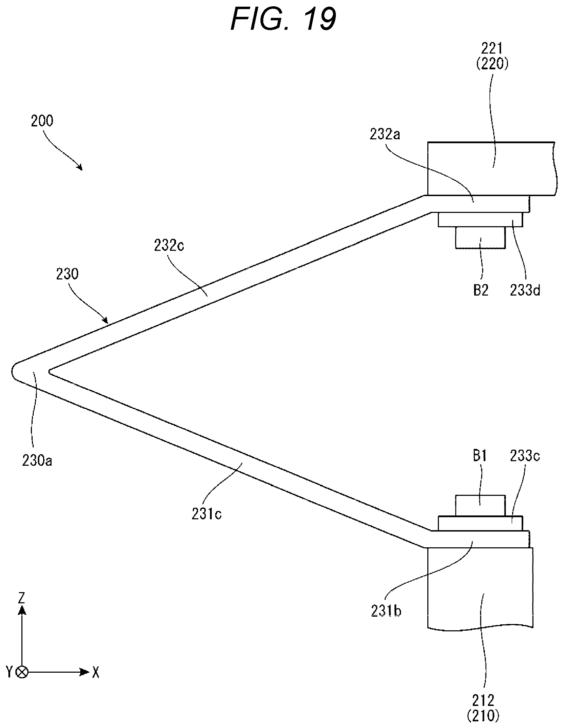

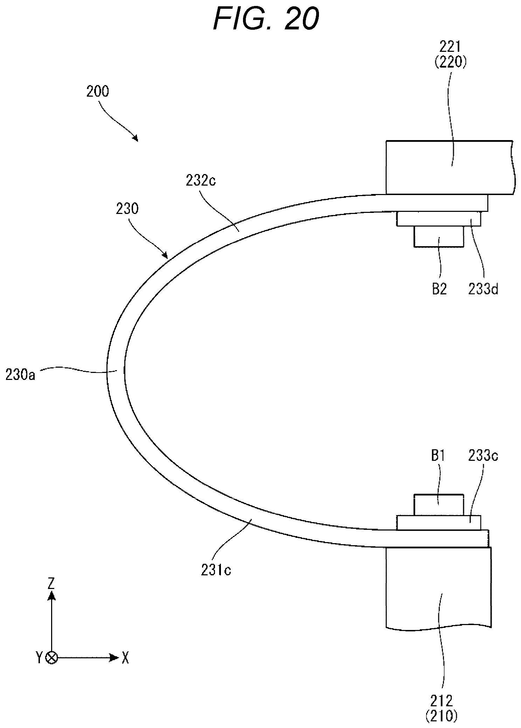

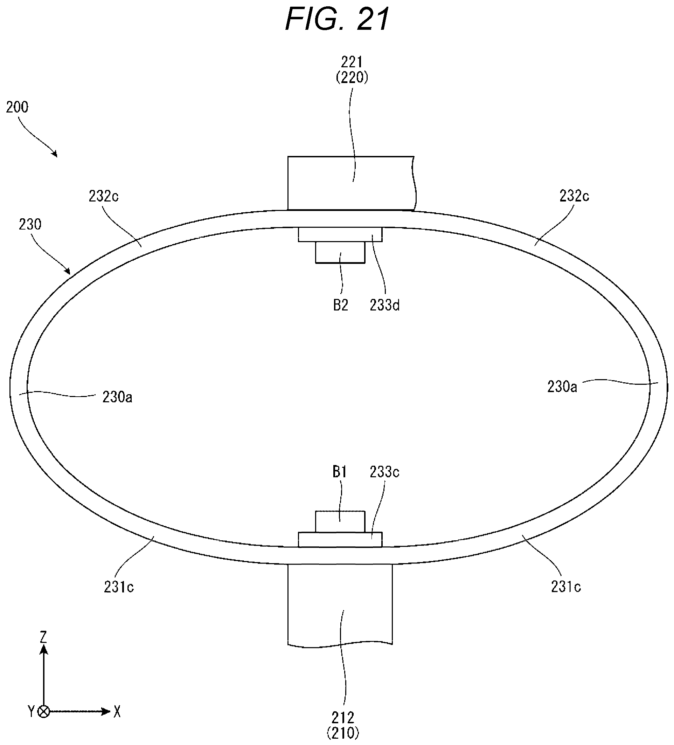

FIG. 19 is a front view showing a plate spring provided in a vibration generating apparatus according to a sixth embodiment. FIGS. 20 and 21 are front views respectively showing modified examples of the plate spring.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the respective drawings of the embodiment, the same configurations as those of the above described embodiment have the same signs. Furthermore, the plate springs 230, 240 have the same configuration as each other and, as below, the plate spring 230 will be representatively explained and the explanation of the plate spring 240 will be omitted.

As shown in FIG. 19, in the vibration generating apparatus 200 of the embodiment, the plate spring 230 is formed by bending of a single flat plate. That is, the first member 231 and the second member 232 are integrally formed. Thereby, the plate spring 230 may be manufactured at a lower cost.

According to the sixth embodiment, the same effects as those of the above described first embodiment may be exerted. Note that the shape of the plate spring 230 is not particularly limited, but may be e.g., a curved shape curved in an arc shape as shown in FIG. 20 or an annular shape as shown in FIG. 21.

### Seventh Embodiment

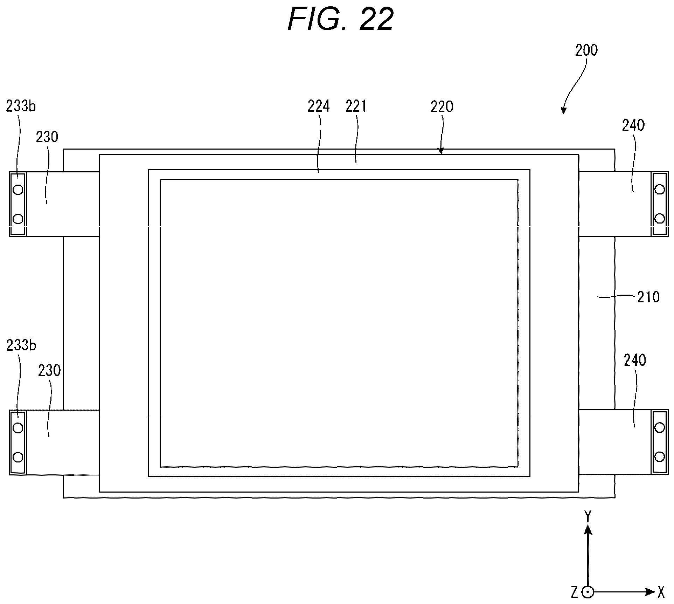

FIG. 22 is a top view showing a vibration generating apparatus according to a seventh embodiment.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the drawing of the embodiment, the same configurations as those of the above described embodiment have the same signs.

As shown in FIG. 22, in the vibration generating apparatus 200 of the embodiment, a pair of plate springs 230 are placed in line in the Y-axis directions and a pair of plate springs 240 are placed in line in the Y-axis directions. That is, the trough 220 is supported by the four plate springs 230, 240.

According to the seventh embodiment, the same effects as those of the above described first embodiment may be exerted.

### Eighth Embodiment

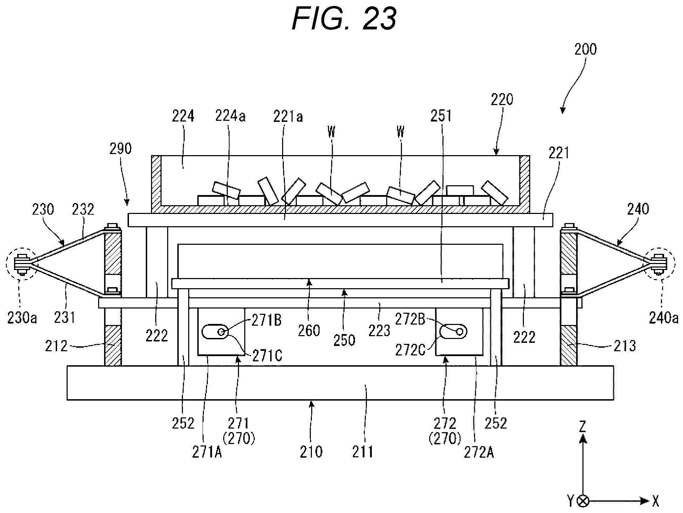

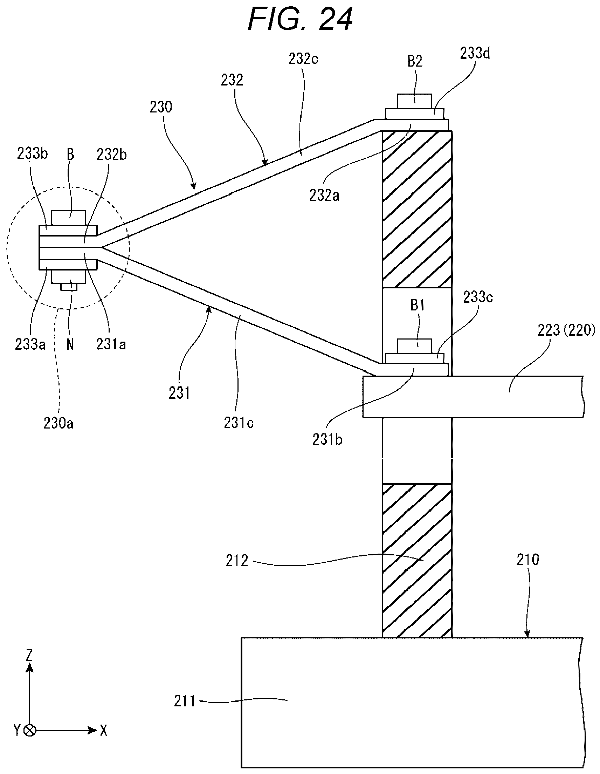

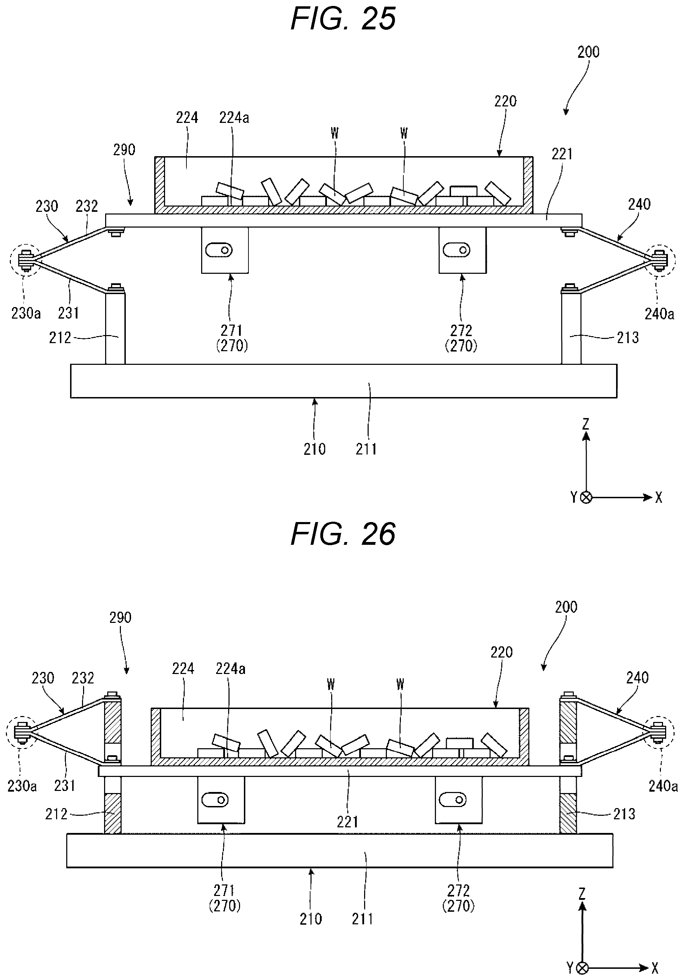

FIG. 23 is a front view showing a vibration generating apparatus according to an eighth embodiment. FIG. 24 is a front view showing a plate spring. FIGS. 25 and 26 are front views respectively showing modified examples of the vibration generating apparatus.

The vibration generating apparatus 200 according to the embodiment is the same as the above described vibration generating apparatus 200 of the first embodiment except that the configurations of the plate springs 230, 240 are different. In the following description, the vibration generating apparatus 200 of the embodiment will be explained with a focus on differences from the above described first embodiment and the explanation of the same items will be omitted. Further, in the respective drawings of the embodiment, the same configurations as those of the above described embodiment have the same signs. Furthermore, the plate springs 230, 240 have the same configuration as each other and, as below, the plate spring 230 will be representatively explained and the explanation of the plate spring 240 will be omitted.

As shown in FIG. 23, in the vibration generating apparatus 200 of the embodiment, the upper end portions of the respective plate springs 230, 240 are coupled to the base 210 and the lower end portions are coupled to the trough 220. Regarding the plate spring 230, specifically, as shown in FIG. 24, the lower end portion 231b of the first member 231 is coupled to the second base 223 of the trough 220, and the upper end portion 232a of the second member 232 is coupled to the columnar portion 212 of the base 210. According to the configuration, for example, compared to the above described first embodiment, the reduction in height of the vibration generating apparatus 200 may be realized.

When the illumination unit 260 is placed as in the embodiment, the reduction in height is difficult, however, in a simpler configuration, e.g., configurations as shown in FIGS. 25 and 26, compared to the configuration in FIG. 25 in which the upper end portion of the plate spring 230 is coupled to the trough 220 and the lower end portion is coupled to the base 210, the height is lower in the configuration in FIG. 26 in which the upper end portion of the plate spring 230 is coupled to the base 210 and the lower end portion is coupled to the trough 220. Note that, in the configurations shown in FIGS. 25 and 26, the frame 250 and the illumination unit 260 are omitted and the spacer 222 and the second base 223 are further omitted from the trough 220, and the first, second vibration motors 271, 272 are placed on the lower surface of the first base 221.

As described above, in the vibration generating apparatus 200 of the embodiment, both end portions of the respective plate springs 230, 240 are placed in line in the vertical direction and the lower end portions are coupled to the trough 220. Thereby, the reduction in height of the vibration generating apparatus 200 may be realized.

According to the eighth embodiment, the same effects as those of the above described first embodiment may be exerted.

### Ninth Embodiment

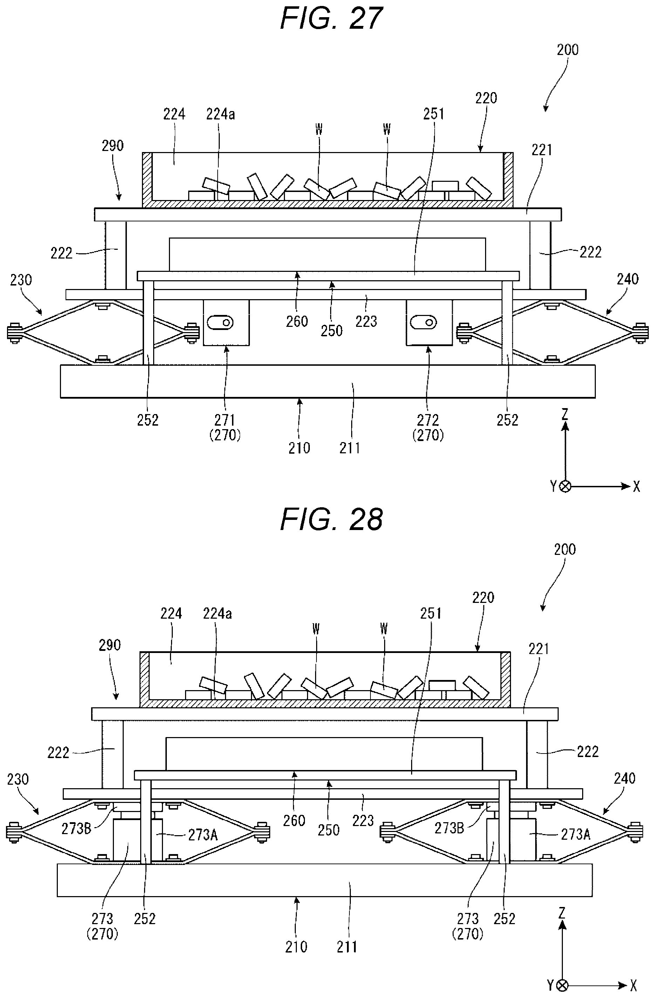

FIG. 27 is a front view showing a vibration generating apparatus according to a ninth embodiment.

The vibration generating apparatus 200 according to the embodiment is the same as the above described vibration generating apparatus 200 of the seventh embodiment except that the configurations of the plate springs 230, 240 are different. In the following description, the vibration generating apparatus 200 of the embodiment will be explained with a focus on differences from the above described seventh embodiment and the explanation of the same items will be omitted. Further, in the drawing of the embodiment, the same configurations as those of the above described embodiment have the same signs.

As shown in FIG. 27, in the vibration generating apparatus 200 of the embodiment, the four plate springs 230, 240 have rhombic shapes shown in FIG. 16. Further, the columnar portions 212, 213 are omitted from the base 210 and the four plate springs 230, 240 are placed between the base 210 and the second base 223. Furthermore, the lower end portions of the respective plate springs 230, 240 are coupled to the base 210 and the upper end portions are coupled to the second base 223 of the trough 220. According to the configuration, the plate springs 230, 240 are placed to overlap with the trough 220 and the spread in the XY-plane of the vibration generating apparatus 200 may be suppressed. Accordingly, downsizing of the vibration generating apparatus 200 may be realized.

According to the ninth embodiment, the same effects as those of the above described first embodiment may be exerted.

### Tenth Embodiment

FIG. 28 is a front view showing a vibration generating apparatus according to a tenth embodiment.

The vibration generating apparatus 200 according to the embodiment is the same as the above described vibration generating apparatus 200 of the seventh embodiment except that the configurations of the plate springs 230, 240 and the vibration generation unit 270 are different. In the following description, the vibration generating apparatus 200 of the embodiment will be explained with a focus on differences from the above described seventh embodiment and the explanation of the same items will be omitted. Further, in the drawings of the embodiment, the same configurations as those of the above described embodiment have the same signs.

In the vibration generating apparatus 200 of the embodiment, the four plate springs 230, 240 have rhombic shapes shown in FIG. 16. Further, as shown in FIG. 28, the vibration generation unit 270 has four voice coil motors 273. The respective voice coil motors 273 are respectively placed within the four plate springs 230, 240. Note that, in FIG. 28, for convenience of explanation, only the two plate springs 230, 240 located at the minus side in the Y-axis direction (the near side) and the two voice coil motors 273 placed within these two plate springs 230, 240 are shown.

Each voice coil motor 273 has a main body 273A and a vibration shaft 273B vibrating in the vertical direction relative to the main body 273A by energization. The main body 273A is fixed to the base 210 and the vibration shaft 273B is fixed to the trough 220. According to the configuration, the magnitude and timing of the vibrations of the respective voice coil motors 273 are controlled, and thereby, the above described vibrations A1, A2, A3, A4 may be applied to the trough 220. Note that the voice coil motor 273 may have a coil at one of the fixed side and the vibration side and a magnet at the other side or may have an electromagnet at one side and a magnetic metal at the other side. In other words, the motor may be called an electromagnetic vibration generator.

According to the tenth embodiment, the same effects as those of the above described first embodiment may be exerted.

As above, the vibration generating apparatus and the pickup system of the present disclosure are explained based on the illustrated embodiments, however, the present disclosure is not limited to those. The scope of the invention is defined by the appended claims.

## Claims

1. A vibration generating apparatus (200) comprising:
a trough (220) having a mounting surface (224a) on which a workpiece (W) is mounted;
two plate springs (230, 240) supporting the trough (220); and
a vibration generation unit (270) vibrating the trough (220) while elastically deforming the respective plate springs (230, 240) and moving the workpiece (W) on the mounting surface (224a), wherein
the two plate springs (230, 240) are placed along movement directions of the workpiece (W) and respectively have bent portions (230a, 240a) projecting in directions along the movement directions, and
**characterized in that**
each of the plate springs (230, 240) has a plate-like first inclined portion (231c) and a plate-like second inclined portion (232c) inclined in opposite directions.

2. The vibration generating apparatus (200) according to claim 1, wherein
the first inclined portion (231c) and the second inclined portion (232c) are symmetrically placed.

3. The vibration generating apparatus (200) according to claim 1, wherein
the first inclined portion (231c) and the second inclined portion (232c) are separately formed.

4. The vibration generating apparatus (200) according to claim 1, wherein
both end portions of each of the plate springs (230, 240) are placed in line in a vertical direction and a lower end portion (231b, 232b) is coupled to the trough (220).

5. The vibration generating apparatus (200) according to claim 1, wherein
a center of gravity of a part supported by the two plate springs (230, 240) is located between the two plate springs (230, 240).

6. The vibration generating apparatus (200) according to claim 1, wherein
the vibration generation unit (270) includes a first vibration motor (271) and a second vibration motor (272) having rotation shafts (271B, 272B) along a horizontal direction and parallel to each other.

7. A pickup system (100) comprising:
a vibration generating apparatus (200) according to claim 1 on which a workpiece (W) is mounted;
a vision (400) imaging the workpiece (W) mounted on the vibration generating apparatus (200); and
a robot (500) picking up the workpiece (W) mounted on the vibration generating apparatus (200) based on an imaging result of the vision (400).

## Patentansprüche

1. Schwingungserzeugungsvorrichtung (200), umfassend:
eine Wanne (220) mit einer Montagefläche (224a), auf der ein Werkstück (W) montiert ist;
zwei Blattfedern (230, 240), die die Wanne (220) stützen; und
eine Schwingungserzeugungseinheit (270), die die Wanne (220) in Schwingung versetzt, während die jeweiligen Blattfedern (230, 240) elastisch verformt und das Werkstück (W) auf der Montagefläche (224a) bewegt wird, wobei
die zwei Blattfedern (230, 240) entlang Bewegungsrichtungen des Werkstücks (W) angeordnet sind und jeweils gekrümmte Abschnitte (230a, 240a) aufweisen, die in Richtungen entlang der Bewegungsrichtungen vorstehen, und
**dadurch gekennzeichnet, dass**
jede der Blattfedern (230, 240) einen plattenförmigen ersten geneigten Abschnitt (231c) und einen plattenförmigen zweiten geneigten Abschnitt (232c) aufweist, die in entgegengesetzten Richtungen geneigt sind.

2. Schwingungserzeugungsvorrichtung (200) nach Anspruch 1, wobei
der erste geneigte Abschnitt (231c) und der zweite geneigte Abschnitt (232c) symmetrisch angeordnet sind.

3. Schwingungserzeugungsvorrichtung (200) nach Anspruch 1, wobei
der erste geneigte Abschnitt (231c) und der zweite geneigte Abschnitt (232c) separat gebildet sind.

4. Schwingungserzeugungsvorrichtung (200) nach Anspruch 1, wobei
beide Endabschnitte jeder der Blattfedern (230, 240) in einer Linie in einer vertikalen Richtung angeordnet sind und ein unterer Endabschnitt (231b, 232b) an die Wanne (220) gekoppelt ist.

5. Schwingungserzeugungsvorrichtung (200) nach Anspruch 1, wobei
ein Schwerpunkt eines Teils, der von den zwei Blattfedern (230, 240) gestützt wird, sich zwischen den zwei Blattfedern (230, 240) befindet.

6. Schwingungserzeugungsvorrichtung (200) nach Anspruch 1, wobei
die Schwingungserzeugungseinheit (270) einen ersten Schwingungsmotor (271) und einen zweiten Schwingungsmotor (272) mit Drehwellen (271B, 272B) entlang einer horizontalen Richtung und parallel zueinander enthält.

7. Aufnahmesystem (100), umfassend:
eine Schwingungserzeugungsvorrichtung (200) nach Anspruch 1, auf der ein Werkstück (W) montiert ist;
eine Abbildungsvorrichtung (400), die das Werkstück (W), das auf der Schwingungserzeugungsvorrichtung (200) montiert ist, abbildet; und
einen Roboter (500), der das Werkstück (W), das auf der Schwingungserzeugungsvorrichtung (200) montiert ist, basierend auf einem Abbildungsergebnis der Abbildungsvorrichtung (400) aufnimmt.

## Revendications

1. Appareil de génération de vibrations (200) comprenant :
un bac (220) comportant une surface de montage (224a) sur laquelle est montée une pièce usinée (W) ;
deux ressorts à lame (230, 240) supportant le bac (220) ; et
une unité de génération de vibrations (270) faisant vibrer le bac (220) tout en déformant élastiquement les ressorts à lame (230, 240) respectifs et déplaçant la pièce usinée (W) sur la surface de montage (224a), dans lequel
les deux ressorts à lame (230, 240) sont placés le long de directions de déplacement de la pièce usinée (W) et comportent respectivement des portions courbées (230a, 240a) faisant saillie dans des directions le long des directions de déplacement, et
**caractérisé en ce que**
chacun des ressorts à lame (230, 240) comporte une première portion inclinée du genre lame (231c) et une deuxième portion inclinée du genre lame (232c) inclinées dans des directions opposées.

2. Appareil de génération de vibrations (200) selon la revendication 1, dans lequel
la première portion inclinée (231c) et la deuxième portion inclinée (232c) sont placées symétriquement.

3. Appareil de génération de vibrations (200) selon la revendication 1, dans lequel
la première portion inclinée (231c) et la deuxième portion inclinée (232c) sont formées séparément.

4. Appareil de génération de vibrations (200) selon la revendication 1, dans lequel
les deux portions courbées de chacun des ressorts à lame (230, 240) sont placées en ligne dans une direction verticale et une portion d'extrémité inférieure (231b, 232b) est accouplée au bac (220).

5. Appareil de génération de vibrations (200) selon la revendication 1, dans lequel
un centre de gravité d'une partie supportée par les deux ressorts à lame (230, 240) se situe entre les deux ressorts à lame (230, 240).

6. Appareil de génération de vibrations (200) selon la revendication 1, dans lequel
l'unité de génération de vibrations (270) inclut un premier moteur à vibrations (271) et un deuxième moteur à vibrations (272) comportant des arbres de rotation (271B, 272B) le long d'une direction horizontale et parallèles entre eux.

7. Système de collecte (100) comprenant :
un appareil de génération de vibrations (200) selon la revendication 1, sur lequel est montée une pièce usinée (W) ;
une vision (400) pour l'imagerie de la pièce usinée (W) montée sur l'appareil de génération de vibrations (200) ; et
un robot (500) collectant la pièce usinée (W) montée sur l'appareil de génération de vibrations (200) sur la base d'un résultat d'imagerie de la vision (400).
